# FASCICULE DE BREVET EUROPEEN

(11) **EP 0 538 128 B1**
(45) Date de publication et mention de la délivrance du brevet: **05.07.1995**
(21) Numéro de dépôt: 92402813.7
(22) Date de dépôt: 14.10.1992
(51) Int. Cl.: F16B 13/06, F01D 5/30, F04D 29/32, F16B 13/08

(54) **Moyens pour l'ancrage d'une pièce par rapport à une autre**
Mittel zum Verankern von einem Teil bezüglich eines anderen Teils
Means for anchoring a part with respect to another one

(30) Priorité: 16.10.1991 FR 9112776
(43) Date de publication de la demande: 21.04.1993
(73) Titulaire: JEUMONT INDUSTRIE - JI, F-92400 Courbevoie (FR)
(72) Inventeur: Mairesse, Yves, F-59216 Dimont (FR); Debleser, Yves, B-7501 Naast (BE)
(74) Mandataire: Phélip, Bruno

(56) Documents cités:
- FR-A- 1 225 149
- US-A- 2 373 585
- US-A- 5 042 888

## Description

La présente invention est relative à l'ancrage d'une pièce par rapport à une autre.

Plus particulièrement, cet ancrage comprend des moyens d'ancrage comportant des moyens du type à cône de serrage.

Les liaisons mécaniques utilisant les couples coniques de serrage sont déjà connues . Dans le domaine de la machine outil notamment , on peut citer par exemple les cônes de fraise d'usinage , les boulonneries à expansion , les accouplements à manchons coniques de serrage ou encore les limiteurs de couple utilisant ce principe .

On peut citer le document US-5,042,888 qui décrit un système d'ancrage d'une pièce par rapport à une autre, comprenant des moyens d'ancrage, une pièce à ancrer et une pièce d'ancrage dans laquelle un trou a été ménagé, les moyens d'ancrage comportant un écrou, une bague conique et des moyens formant ressort.

Les moyens d'ancrage comprennent également une tige filetée destinée à être placée partiellement dans le trou. Elle comporte une partie d'extrémité évasée, placée à l'intérieur du trou. Les moyens formant ressort sont conçus pour exercer une pression sur ladite bague conique en direction de ladite partie évasée, sur laquelle la bague conique est destinée à s'emboîter.

La pièce à ancrer est placée sur la pièce d'ancrage de façon à ce que la tige filetée traverse la pièce à ancrer, l'écrou présentant un filetage interne pour pouvoir être vissé sur la tige et ainsi assurer le maintien de la pièce à ancrer.

La présente invention propose quant à elle des moyens d'ancrage d'un type nouveau qui permettent notamment l'implantation non débouchante d'une première pièce dans la "peau " d'une deuxième pièce massive .

A cet effet, la pièce à ancrer présente une base la terminant à une de ses extrémités, ladite base étant destinée à être placée dans ledit trou pour solidariser la pièce à ancrer à la pièce d'ancrage et comprenant une première partie autour de laquelle ledit écrou qui présente un filetage extérieur, est destiné à être passé et une deuxième partie troconique s'évasant de ladite première partie vers l'extérieur , les parois intérieures de la bague conique étant destinées à épouser les parois extérieures de ladite partie tronconique, les parois du trou ménagé dans la pièce d'ancrage pour recevoir ladite bague étant de dimensions et de forme telles qu'elles permettent d'une part, l'introduction dans ledit trou de la base de la pièce à ancrer et de la bague conique et d'autre part, le maintien de ladite base et de la pièce à ancrer par serrage des parois extérieures de ladite bague conique sur au moins une portion des parois intérieures dudit trou , ledit trou étant également destiné à recevoir ledit écrou et étant muni d'un filetage complémentaire du filetage de l'écrou et destiné à coopérer avec celui-ci pour le maintien dudit écrou dans ledit trou , lesdits moyens formant ressort étant destinés à repousser l'une par rapport à l'autre la partie tronconique de, la base et la bague conique , lorsque ladite bague est en place dans ledit trou , pour réaliser le serrage précité .

Un tel ancrage présente de nombreux avantages . Il est robuste et d'une grande simplicité , de sorte que les implantations qu'il permet de réaliser sont très fiables . Il présente de grandes facilités de montage et de démontage et permet de réaliser des liaisons entre des pièces en des matériaux fondamentalement différents tels qu'une implantation d'aluminium dans une pièce d'acier ou une implantation de plomb dans une pièce de fonte , etc ...

Egalement encore , les implantations réalisées avec cet ancrage sont d'un réglage en orientation très précis . L'ancrage a une bonne tenue à la compression et permet la reprise des sollicitations combinées en traction et en torsion de la première pièce par la deuxième pièce et de supprimer les précontraintes et concentrations de contraintes.

Cet ancrage est avantageusement complété par les différentes caractéristiques suivantes prises seules ou selon toutes leurs combinaisons techniquement possibles .
- le trou ménagé dans la pièce d'ancrage et destiné à recevoir la base de la pièce à ancrer est un trou borgne .
- les moyens formant ressort comportent deux rondelles ressort disposées en opposition sur le fond du trou borgne de réception , ladite base étant destinée à venir en appui par son extrémité sur lesdites rondelles lorsqu'elle est en poste dans le trou de réception .
- les parois extérieures de la bague conique et la portion de parois intérieures destinées à coopérer avec les parois extérieures de ladite bague conique sont cylindriques .
- les parois du trou définissent pour ledit trou plusieurs alésages superposés et de diamètre différent , l'alésage débouchant de la pièce d'ancrage étant destiné à recevoir l'écrou , étant de plus grand diamètre que l'alésage qui le prolonge et qui est quant à lui destiné à recevoir la bague conique , ces deux alésages étant séparés entre eux par un décrochement annulaire , la bague conique étant munie vers son extrémité proche de l'écrou d'une protubérance annulaire l'entourant au niveau de ses extrémités destinées à venir à appui sur ledit décrochement annulaire.
- l'écrou comprend en sa partie la plus proche de la bague conique , une jupe annulaire destinée , une fois lesdits moyens en poste à entourer la protubérance annulaire de la bague conique , ladite bague conique étant ainsi retenue lorsque la base est en poste dans le trou borgne , notamment par coincement de lasusdite protubérance annulaire entre ledit écrou et le décrochement précité .
- la portion des parois du trou recevant la bague conique et les parois extérieures de ladite bague conique sont dimensionées H7/g6.
- la bague conique est réalisée en deux demi-bagues destinées à être fermées l'une sur l'autre , lesdites demi-bagues étant munies d'un jonc élastique destiné à les entourer pour les maintenir l'une par rapport à l'autre .

L'invention a encore pour objet l'utilisation de l'ancrage d'une pièce par rapport à une autre précité, dans laquelle la pièce à ancrer et la pièce d'ancrage sont en des matériaux fondamentalement différents , tels que respectivement de l'aluminium et de l'acier , du plomb et de la fonte .

L'invention a encore pour objet aussi l'utilisation de l'ancrage précité d'une pièce par rapport à l'autre , dans le cas où la pièce à ancrer doit être réglée de façon précise en orientation.

La description qui suit d'un mode de réalisation particulier de l'invention est purement illustrative et non limitative . Elle peut être lue en regard des dessins annexés sur lesquels :
- la figure 1 est une représentation en coupe de la base d'une pièce à implanter et d'un trou borgne pratiqué en peau d'une pièce massive destinée à servir de support d'implantation, dans des positions respectives où ladite base et ledit trou borgne sont disjoints , ladite base et ledit trou borgne étant munis de moyens d'ancrage conformes à un mode de réalisation particulier de l'invention ;
- la figure 2 est une vue en coupe des mêmes éléments dans une première position où ladite base est engagée par rapport au trou borgne :
- la figure 3 est une vue en coupe des mêmes éléments dans une deuxième position engagée de la base par rapport au trou borgne ;
- la figure 4 est une vue en coupe illustrant la mise à poste des moyens d'ancrage conforme au même mode de réalisation de l'invention ;
- la figure 5 est une vue en coupe des mêmes éléments dans une position d'ancrage de la base dans le trou borgne;
- la figure 6 est une vue en coupe illustrant pour un ventilateur turbo alternateur la solidarisation à l'aide des moyens d'ancrage conformes à l'invention d'une pale sur le rotor dudit ventilateur .

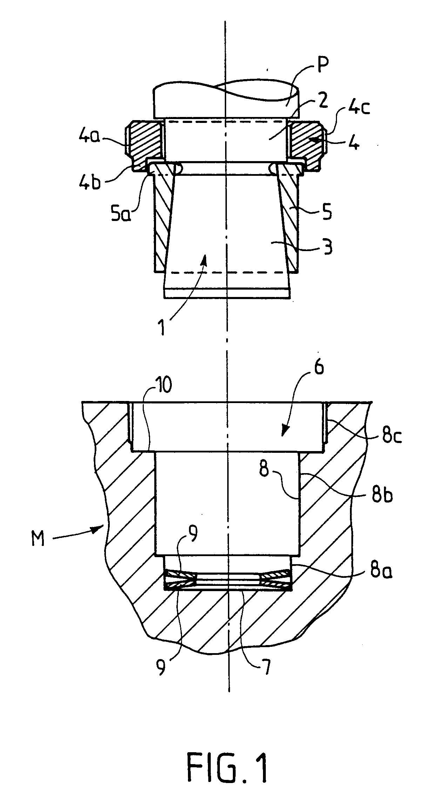

On se réfère à la figure 1 . Sur cette figure 1 a été représentée la base 1 d'une pièce P destinée à être implantée en " peau " d'un support massif M . Cette base a été préalablement usinée et comprend principalement deux parties , l'une , référencée par 2 , l'autre par 3. La partie 2 est directement dans le prolongement de la pièce P et est de forme cylindrique . La partie 3 , prolonge axialement ladite partie 2 , du côté de ladite partie 2 qui est opposée à ladite pièce P . Cette partie a une forme principalement tronconique s'évasant de ladite partie 2 vers l'extérieur . Le grand diamètre de ladite partie 3 correspond sensiblement au diamètre de la partie cylindrique 2 . Une gorge 3a annulaire a été ménagée en la partie supérieure de la partie 3 au niveau de son intersection avec la partie 2.

La base 1 est associée à un écrou 4 , ainsi qu'à une bague conique 5 . L'écrou 4 est disposé sur ladite base 1 au niveau de sa partie cylindrique 2 qu'il entoure . Ledit écrou 4 est un écrou à filetage externe . Il comporte une partie principale 4a qui est un anneau de section annulaire sensiblement rectangulaire et sur la face extérieure de laquelle est usiné le filetage 4c dudit écrou 4 . Le diamètre intérieur de l'anneau 4a correspond sensiblement au diamètre extérieur de la partie 2 de la base 1 . La hauteur dudit anneau 4a est légèrement inférieure à la hauteur de ladite partie 2. Cet anneau 4a est complété par une jupe 4b également cylindrique et qui lui est coaxiale . Cette jupe 4b s'étend à partir de celle des faces de l'anneau 4a qui est destinée à être directement en regard du trou borgne dans lequel la base 1 sera implantée . Son diamètre intérieur correspond sensiblement au demi-diamètre de l'anneau 4a . Son diamètre extérieur est légèrement inférieur au diamètre extérieur dudit anneau 4a .

La bague conique 5 est une bague en deux parties refermées sur la partie tronconique 3 de la base 1 . Cette bague 5 a une forme intérieure destinée à épouser sensiblement la forme extérieure de la partie 3 jusqu'à un diamètre de ladite partie 3 proche du diamètre d'extrémité de celle-ci . La paroi extérieure de cette bague 5 a une forme principalement cylindrique et se termine à son extrémité destinée à être directement en regard de l'écrou 4 par une protubérance annulaire 5a radiale qui lui est coaxiale . Le diamètre extérieur de cette protubérance 5a est légèrement inférieur au diamètre intérieur de la jupe 4b . Leurs hauteurs sont sensiblement identiques.

Sur cette même figure 1 a été représenté un trou borgne 6 ménagé en " peau" d'un support massif M et dans lequel la base 1 est destinée à être implantée . Ce trou borgne 6 est délimité par un fond 7 et des parois 8 s'étendant dudit fond 7 pour déboucher de la pièce massive M . Ces parois 8 définissent trois alésages 8a, 8b et 8c cylindriques coaxiales et de diamètres différents . Ces alésages cylindriques 8a, 8b et 8c sont superposés et séparés entre eux, par des déccrochements annulaires . L'alésage 8a s'étend directement du fond 7 et a un diamètre qui correspond sensiblement au plus grand diamètre de la partie tronconique 3 de la base 1 , par rapport auquel il est légèrement supérieur. L'alésage intermédiaire 8b a quant à lui , un diamètre intérieur qui correspond sensiblement au diamètre extérieur de la partie principale de la bague 5 . Sa hauteur correspond sensiblement à la hauteur de la partie principale de la bague 5 , laquelle partie s'étend de l'extrémité de ladite bague 5 qui est destinée à être directement en regard du fond 7 jusqu'à celle des parois de la protubérance 5a qui est elle aussi destinée à être directement en regard dudit fond 7. L'alésage 8c débouche du support massif M et a quant à lui un diamètre qui correspond sensiblement au diamètre extérieur de l'écrou 4 . Les parois dudit alésage 8c sont munies d'un filetage intérieur destiné à coopérer avec le filetage extérieur 4c de l'écrou 4 . Le déccrochement de séparation entre les alésages 8b et 8c a été référencé par 10 .

Dans l'alésage 8a , sont disposées sur le fond 7 du trou borgne 6 deux rondelles ressorts 9 en opposition . Ces rondelles 9 sont centrées par leurs diamètres extérieurs qui correspondent aux diamètres intérieurs de ladite portion cylindrique 8a .

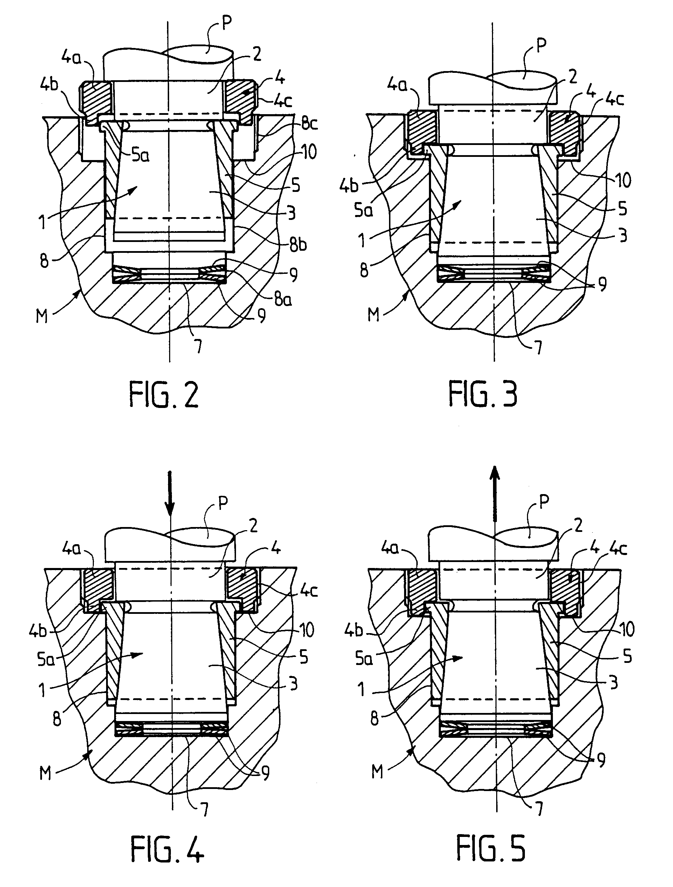

On va maintenant décrire la mise en poste de la base 1 dans le trou borgne 6 . Sur la figure 2, ont été représentés la base 1 , son écrou 4 et la bague 5 dans une position de présentation par rapport au trou borgne 6. L'introduction de la partie 3 et de la bague 5 au niveau de l'alésage 8b est réalisée facilement grâce à un ajustement H7/g6 entre les parois dudit alésage 8 et les parois extérieures de la bague 5.

Une fois cette introduction réalisée , un opérateur vient , par exemple manuellement , visser le filetage 4c de l'écrou 4 sur les parois de l'alésage 8c, jusqu'à par exemple la position qui a été représentée sur la figure 3 . L'écrou 4 descendant dans ledit alésage 8c , sa face en regard du fond 7 vient en appui sur l'extrémité de la bague 5 qui porte la protubérance 5a que la jupe annulaire 4b entoure . Les parois intérieures de ladite bague 5 exerçent une action sur les parois extérieures de la partie 3 , de sorte que l'introduction de la base 1 se poursuit . L'extrémité de plus grand diamètre de ladite partie 3 vient alors en contact sur les rondelles 9 .

L'étape d'ancrage définitive de la pièce P dans le support massif M a été illustrée sur la figure 4 . Lors de cette étape , un outillage de compression , par exemple du type serre-joints , vient agir , ainsi qu'il est indiqué par la flèche représentée sur la figure , pour réaliser l'écrasement des rondelles 9 , en appliquant à la pièce P et à la base 1 un effort qui correspond aux caractéristiques des rondelles 9 précitées. L'écrasement des rondelles 9 est limité d'une part par la butée de l'épaulement annulaire 5a sur le déccrochement 10 entre l'alésage 8c et l'alésage 8b et d'autre part par la butée de la face d'extrémité cylindrique de la partie 2 de la base 1 qui est en regard du fond 7 sur l'extrémité de la bague 5 de plus grande épaisseur . Simultanément à l'action de l'outillage de compression , l'écrou 4 est également amené en une position définitive où la jupe 4b est en butée sur le déccrochement 10 précité .

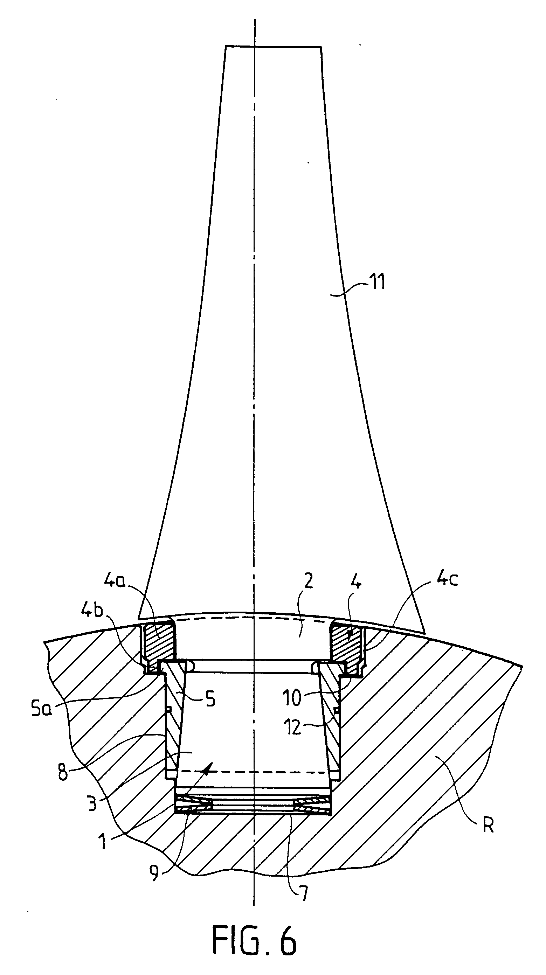

La position définitive des différents éléments constitutifs desdits moyens d'ancrage après mise à poste a été représentée sur la figure 6. Lorsque l'outillage de compression utilisé dans l'étape précédente libère la pièce P et la base 1 , ladite base 1 est repoussée , ainsi qu'indiqué par la flèche sur la figure , par action des rondelles ressorts 9 sur la partie tronconique 3 . La bague conique 5 étant maintenue en position dans le trou borgne 6 , la remontée de la partie 3 tronconique dans ledit trou borgne 6 réalise l'autocoincement de la bague 5 et de ladite partie 3 sur les parois de l'alésage 8b . L'écrou 4 reprend quant à lui une partie de l'effort restituée par les rondelles 9 de sorte qu'il se trouve lui aussi freiné .

Toute traction ultérieure sur la pièce P augmentera le serrage de la bague 5 dans l'alésage 8b , sans charge supplémentaire sur l'écrou 4 qui n'a , après l'amorçage , qu'une fonction de retenue . On notera que la section résistante de ces moyens d'ancrage travaille sans précontrainte de montage . Ces moyens d'ancrage permettront la reprise des sollicitations en traction et/ou en torsion auxquelles sera éventuellement soumise la pièce P.

Pour le démontage un décoincement préalable sera nécessaire . Il pourra par exemple être réalisé par compression à l'aide d'un outillage semblable à celui utilisé lors de la mise à poste définitive , avec un effort supérieur à celui nécessaire au montage , ou par frappe avec un élément du type marteau sur l'axe de la pièce P de façon à induire dans ladite pièce des vibrations suffisantes au décoincement des différents éléments constituant les moyens d'ancrage entre eux. Une fois ce décoincement réalisé , il est nécessaire de maintenir la pièce P et sa base 1 sous une compression suffisante pour débloquer l'écrou 4 . La libération de la pièce P et de sa base 1 par l'outillage pourra être réalisé progressivement pour accompagner le désserrage de l'écrou . Le désengagement de l'écrou 4 et de la bague 5 s'effectue par les opérations inverses à celles du montage .

On notera qu'un réglage en orientation de la pièce P est possible sur 360°C . Un tel réglage peut être réalisé soit au montage de ladite pièce P , lors de l'étape de la mise à poste définitive , juste avant qu'il n'y est contact de l'épaulement 5a sur le déccrochement 10 , soit lors du démontage , avec une compression assurant la même configuration que celle du stade " montage " , sans qu'il ne soit alors nécessaire de débloquer l'écrou 4 . Dans les deux cas , les rondelles ressorts 9 sont comprimées de telle sorte qu'il n'existe plus d'effort sur le déccrochement 10 ou l'épaulement 5a. Les rondelles ressorts 9 accompagneront ce mouvement de rotation par frottement au niveau des bords de leur diamètre intérieur.

Un tel dispositif d'ancrage peut connaître de nombreuses applications industrielles . On a illustré sur la figure 6 l'utilisation d'un tel dispositif pour réaliser l'ancrage d'une pale 11 de ventilateur rapportée en aluminium sur un rotor R de turboalternateur de 65 MVA , 3600 t/mn et sur vitesse de 4320 t/mn . Les deux parties de la bague 5 sont maintenues ensemble par un jonc élastique 12 en fil à ressort les entourant , qui leur permet de retrouver la configuration g6 dès qu'elles ne sont plus sollicitées par la partie tronconique 3 de la bague 2 , de sorte que les opérations de montage et de démontage sont facilitées . La conicité retenue pour la partie 5 de la base 1 et pour la bague 3 est de 20 % . De façon générale , cette conicité est fonction du matériau de l'élément à encastrer , des déplacements axiaux à envisager pour cet élément , des sollicitations qui devront être reprises par le serrage etc.. De même , le diamètre et la hauteur des deux demi bagues sont fonction du dimensionnement souhaité pour l'encastrement . Les rondelles 9 sont choisies en fonction des efforts minima et maxima souhaités au préserrage .

Ces moyens d'ancrage seront avantageusement utilisés pour la fixation d'éléments en matériaux sensibles au grippage tels que l'inox , l'aluminium , les Nylons , etc ..., qui nécessite une implantation non débouchante et peu profonde dans une pièce massive . Ils pourront être également utilisés avantageusement pour des pièces soumises à de fortes sollicitations combinées d'arrachement et de torsion .

Les signes de référence insérés après les caractéristiques techniques mentionnées dans les revendications , ont pour seul but de faciliter la compréhension de ces dernières , et n'en limitent aucunement la portée .

## Revendications

1. Ancrage d'une pièce par rapport à une autre, comprenant des moyens d'ancrage, une pièce à ancrer (P) et une pièce d'ancrage (M) dans laquelle un trou (6) a été ménagé, lesdits moyens d'ancrage comportant un écrou (4), une bague conique (5) et des moyens (9) formant ressort, caractérisé en ce que la pièce à ancrer (P) présente une base (1) la terminant à une de ses extrémités, ladite base étant destinée à être placée dans ledit trou (6) pour solidariser la pièce à ancrer (P) a la pièce d'ancrage (M) et comprenant une première partie (2) autour de laquelle ledit écrou (4) qui présente un filetage extérieur (4c), est destiné a être passé et une deuxième partie tronconique (3) s'évasant de ladite première partie (2) vers l'extérieur, les parois intérieures de la bague conique (5) étant destinées à épouser les parois extérieures de ladite partie tronconique (3), les parois du trou (6) ménagé dans la pièce d'ancrage (M) pour recevoir ladite bague (5) étant de dimensions et de forme telles qu'elles permettent d'une part, l'introduction dans ledit trou (6) de la base (1) de la pièce a ancrer et de la bague conique (5) et d'autre part, le maintien de ladite base (1) et de la pièce a ancrer (P) par serrage des parois extérieures de ladite bague conique (5) sur au moins une portion des parois intérieures dudit trou (6), ledit trou (6) étant également destiné a recevoir ledit écrou (4) et étant muni d'un filetage complémentaire du filetage (4c) de l'écrou (4) et destiné à coopérer avec celui-ci pour le maintien dudit écrou (4) dans ledit trou (6), lesdits moyens formant ressort (9) étant destinés à repousser l'une par rapport à l'autre la partie tronconique (3) de la base (1) et la bague conique (5), lorsque ladite bague (5) est en place dans ledit trou (6), pour réaliser le serrage précité.

2. Ancrage selon la revendication 1, caractérisé en ce que le trou (6) ménagé dans la pièce d'ancrage (M) et destiné à recevoir la base de la pièce à ancrer (P) est un trou borgne.

3. Ancrage selon la revendication 2 , caractérisé en ce que les moyens formant ressort comportent deux rondelles (9) ressort disposées en opposition sur le fond (7) du trou borgne (6) de réception , ladite base (1) étant destinée à venir en appui par son extrémité sur lesdites rondelles (9) lorsqu'elle est en poste dans le trou (6) de réception .

4. Ancrage selon l'une quelconque des revendications précédentes , caractérisé en ce que les parois extérieures de la bague conique (5) et la portion (8b) de parois intérieures destinées à coopérer avec les parois extérieures de ladite bague conique (5) sont cylindriques .

5. Ancrage selon la revendication 4 , caractérisé en ce que les parois du trou (6) définissent pour ledit trou (6) plusieurs alésages (8a, 8b, 8c) superposés et de diamètre différent , l'alésage (8c) débouchant de la pièce d'ancrage (M) étant destiné à recevoir l'écrou (4) , et étant de plus grand diamètre que l'alésage (8b) qui le prolonge et qui est quant à lui destiné à recevoir la bague conique (5) , ces deux alésages (8b , 8c) étant séparés entre eux par un décrochement annulaire (10) , la bague conique (5) étant munie vers son extrémité proche de l'écrou (4) d'une protubérance annulaire (5a) l'entourant au niveau de ses extrémités destinées à venir à appui sur ledit décrochement annulaire (10).

6. Ancrage selon la revendication 5 , caractérisé en ce que l'écrou (4) comprend en sa partie la plus proche de la bague conique (5) , une jupe annulaire (4b) destinée , une fois lesdits moyens en poste à entourer la protubérance annulaire (5a) de la bague conique (5) , ladite bague conique (5) étant ainsi retenue lorsque la base (1) est en poste dans le trou borgne (6) , notamment par coincement de lasusdite protubérance annulaire (5a) entre ledit écrou (4) et le décrochement (10) précité .

7. Ancrage selon l'une quelconque des revendications 4 et 6 précédentes , caractérisé en ce que la portion (8b) des parois du trou (6) recevant la bague conique (5) et les parois extérieures de ladite bague conique (5) sont dimensionées H7/g6.

8. Ancrage selon l'une quelconque des revendications précédentes , caractérisé en ce que la bague conique (5) est réalisée en deux demi-bagues destinées à être fermées l'une sur l'autre , lesdites demi-bagues étant munies d'un jonc (12) élastique destiné à les entourer pour les maintenir l'une par rapport à l'autre .

9. Utilisation de l'ancrage d'une pièce (P) par rapport à une autre (M) selon l'une quelconque des revendications précédentes , caractérisée en ce que la pièce à ancrer (P) et la pièce d'ancrage (M) sont en des matériaux fondamentalement différents , tels que respectivement de l'aluminium et de l'acier , du plomb et de la fonte .

10. Utilisation de selon la revendication 9 , la pièce à ancrer (P) devant être réglée de façon précise en orientation.

## Claims

1. Anchorage of a part with respect to another one comprising anchoring means, a part to be anchored (P) and an anchoring part (M) in which a hole (6) has been provided, said anchoring means comprising a nut (4), a conical ring (5) and spring forming means (9), characterized in that the part to be anchored (P) has at a end thereof a terminating base (1), said base being provided to be located in said hole (6) to anchor the part to be anchored (P) to the anchoring part (M) and comprising a first part (2) around which the said nut (4) having an external thread (4c) is designed to pass and a second part in the shape of a truncated cone (3) which flares out from said first part (2) towards the exterior, the internal walls of the conical ring (5) being designed to conform with the external walls of said truncated cone part (3), the dimensions and shape of the walls of the hole (6) provided in the anchoring part (M) to receive said conical ring (5) being such that they allow, on the one hand, the introduction of the base (1) of the part to be anchored and the conical ring (5) into said hole (6), and on the other hand, the holding of the said base (1) and the part to be anchored (P) by clamping the external walls of said conical ring (5) over at least a portion of the internal walls of said hole (6), said hole (6) also being designed to receive the nut (4) and being provided with a complementary thread of the thread (4c) of the nut (4) and with which it is designed to cooperate to keep the said nut (4) in the said hole (6), said spring forming means (9) being designed to push back, relative to each other, the truncated cone-shaped part (3) of the base (1) and the conical ring (5), when said ring (5) is in position in said hole (6), in order to achieve the above-mentioned clamping.

2. Anchorage according to claim 1, characterized in that the hole (6) provided in the anchoring part (M) and designed to receive the base of the part to be anchored (P) is a recessed hole.

3. Anchorage according to claim 2, characterized in that the spring forming means comprise two spring washers (9) arranged in opposition at the bottom (7) of the receiving recessed hole (6), the end of said base (1) being designed to bear upon said washers (9) when it is in position in the receiving hole (6).

4. Anchorage according to any one of the preceding claims, characterized in that the external walls of the conical ring (5) and the portion (8b) of the internal walls designed to cooperate with the external walls of said conical ring (5) are cylindrical.

5. Anchorage according to claim 4, characterized in that the walls of the hole (6) define, for the said hole (6), several superposed bores (8a, 8b, 8c) of different diameters, the bore (8c) emerging from the anchoring part (M) being designed to receive the nut (4), and moreover being larger in diameter than the bore (8b) that extends it and which is able to receive the conical ring (5), these two bores (8b, 8c) being separated from each other by an annular step (10), the conical ring (5) being provided with an annular protuberance (5a) at its end close to the nut (4) and which surrounds it at its ends designed to bear against the said annular step (10).

6. Anchorage according to claim 5, characterized in that the nut (4) comprises at its part closest to the conical ring (5), an annular skirt (4b) designed, once the said means are in position, to surround the annular protuberance (5a) of the conical ring (5), said conical ring (5) thus being held when the base (1) is in position in the recessed hole (6), particularly by the wedging of the above-mentioned annular protuberance (5a) between said nut (4) and the above-mentioned step (10).

7. Anchorage according to any one of the preceding claims 4 and 6, characterized in that the portion (8b) of the walls of the hole (6) receiving the conical ring (5) and the external walls of said conical ring (5) are dimensioned H7/g6.

8. Anchorage according to any one of the preceding claims, characterized in that the conical ring (5) is made from two half-rings designed to close one on the other, said half-rings being provided with an elastic keeper (12) which surrounds them in order to hold them in position relative to each other.

9. Use of the anchorage of a part (P) relative to another part (M) according to any one of the preceding claims, characterized in that the part to be anchored (P) and the anchoring part (M) are made from fundamentally different materials, such as, respectively, aluminium and steel, lead and cast iron.

10. Use according to claim 9, wherein the part to be anchored (P) needs to be precisely adjusted in orientation.

## Patentansprüche

1. Verankerung eines Teils in bezug auf ein anderes, mit einer Verankerungseinrichtung, einem zu verankernden Teil (P) und einem Verankerungsteil (M), in welchem ein Loch (6) ausgebildet ist, wobei die Verankerungseinrichtung aus einer Mutter (4), einer konischen Buchse (5) und einer eine Feder bildenden Einrichtung (9) besteht, dadurch gekennzeichnet, daß das zu verankernde Teil (P) eine Basis (1) aufweist, die den Abschluß des Teils an einem seiner Enden bildet, wobei die Basis zum Anordnen in dem Loch (6) vorgesehen ist, um das zu verankernde Teil (P) mit dem Verankerungsteil (M) zu verbinden, und die Basis einen ersten Teil (2), um den herum die mit einem Außengewinde (4c) versehene Mutter (4) angeordnet ist, und einen kegelstumpfförmigen zweiten Teil (3) aufweist, der sich von dem ersten Teil (2) nach außen aufweitet, wobei die Innenwände der konischen Buchse (5) zur Anlage an dem kegelstumpfförmigen Teil (3) vorgesehen sind, die Wände des zur Aufnahme der Buchse (5) in dem Verankerungsteil (M) ausgebildeten Lochs (6) derart bemessen und ausgebildet sind, daß sie einerseits das Einführen der Basis (1) des zu verankernden Teils und der konischen Buchse (5) und andererseits das Kalten der Basis (1) und des zu verankernden Teils (P) zum Klemmen der Außenwände der konischen Buchse (5) über wenigstens einen Teil der Innenwände des Lochs (6), das gleichermaßen zur Aufnahme der Mutter (4) dient und mit einem zum Gewinde (4c) der Mutter (4) komplementären Gewinde versehen ist und zum Halten der Schraube (4) in dem Loch (6) mit diesem zusammenwirkt, wobei die Federeinrichtung (9) bei im Loch (6) befindlicher Buchse (5) den kegelstumpfförmigen Teil (3) der Basis (1) in bezug auf die konische Buchse (5) zurückdrückt, um die zuvor erwähnte Klemmung zu bewirken.

2. Verankerung nach Anspruch 1, dadurch gekennzeichnet, daß das in dem Verankerungsteil (M) ausgebildete und zur Aufnahme der Basis des zu verankernden Teils (P) vorgesehene Loch (6) ein Sackloch ist.

3. Verankerung nach Anspruch 2, dadurch gekennzeichnet, daß die Federeinrichtung zwei Federscheiben (9) aufweist, die entgegengesetzt zueinander auf dem Boden (7) des Aufnahmesacklochs (6) angeordnet sind, wobei die Basis (1), wenn sie in dem Aufnahmeloch (6) angeordnet ist, mit ihrem Ende an den Scheiben (9) anliegt.

4. Verankerung nach einem der vorhergehenden Ansprüche, dadurch gekennzeichnet, daß die Außenwände der konischen Buchse (5) und der Teil (8b) der zum Zusammenwirken mit den Außenwänden der konischen Buchse (5) vorgesehenen Innenwände zylindrisch sind.

5. Verankerung nach Anspruch 4, dadurch gekennzeichnet, daß die Wände des Lochs (6) für das Loch (6) mehrere übereinanderliegende Bohrungen (8a, 8b, 8c) unterschiedlichen Durchmessers begrenzen, wobei die obere Bohrung (8c) des Verankerungsteils (M) zur Aufnahme der Mutter (4) vorgesehen ist und einen größeren Durchmesser aufweist als die Bohrung (8b), welche eine Verlängerung derselben bildet und ihrerseits zur Aufnahme der konischen Buchse (5) vorgesehen ist, wobei die beiden Bohrungen (8b, 8c) voneinander durch eine ringförmige Schulter (10) getrennt sind, und wobei die konische Buchse (5) an ihrem der Mutter (4) benachbarten Ende mit einem ringförmigen Vorsprung (5a) versehen ist, der sie an ihren zur Anlage an der ringförmigen Schulter (10) vorgesehenen Enden umgibt.

6. Verankerung nach Anspruch 5, dadurch gekennzeichnet, daß die Mutter (4) an ihrem der konischen Buchse (5) nächstgelegenen Teil eine ringförmige Schürze (4b) aufweist, die im zusammengebauten Zustand dazu dient, den ringförmigen Vorsprung (5a) der konischen Buchse (5) zu umgreifen, wodurch die konische Buchse (5) bei in dem Sackloch (6) befindlicher Basis (1) durch Klemmung des ringförmigen Vorsprungs (5a) zwischen der Mutter (4) und der Schulter (10) gehalten ist.

7. Verankerung nach einem der vorhergehenden Ansprüche 4 und 6, dadurch gekennzeichnet, daß der Teil (8b) der Wände des die konische Buchse (5) aufnehmenden Lochs (6) und die Außenwände der konischen Buchse (5) die Abmessungen H7/g6 aufweisen.

8. Verankerung nach einem der vorhergehenden Ansprüche, dadurch gekennzeichnet, daß die konische Buchse (5) aus zwei gegenseitig schließbaren Halbbuchsen gebildet ist , die mit einem elastischen Sicherungsring (12) versehen sind, welcher diese umgibt, um sie in bezug zueinander zu halten.

9. Verwendung der Verankerung eines Teils (P) in bezug auf ein anderes (M) gemäß einem der vorhergehenden Ansprüche, dadurch gekennzeichnet, daß das zu verankernde Teil (P) und das Verankerungsteil (M) aus grundlegend verschiedenen Materialien bestehen, beispielsweise aus Aluminium und Stahl oder Blei und Gußeisen.

10. Verwendung nach Anspruch 9, bei der eine genaue Einstellung der Ausrichtung des zu verankernden Teils (P) erforderlich ist.
